# EUROPEAN PATENT SPECIFICATION

(11) **EP 0 480 930 B1**
(45) Date of publication and mention of the grant of the patent: **09.08.1995**
(21) Application number: 90903201.3
(22) Date of filing: 12.02.1990
(51) Int. Cl.: A62D 3/00, C03B 3/00, C03B 5/027

(54) **A METHOD OF TREATING TOXIC WASTE**
VERFAHREN ZUR BEHANDLUNG VON GIFTABFÄLLEN
PROCEDE POUR TRAITER DES DECHETS TOXIQUES

(30) Priority: 13.02.1989 GB 8903224; 06.09.1989 GB 8920107
(43) Date of publication of application: 22.04.1992
(73) Proprietor: VERT Investments Limited, GB-Leeds LS1 1HQ (GB)
(72) Inventor: McNeill, Keith Russell, Sheffield S6 4GJ (GB)
(74) Representative: Brandon, Paul Laurence
(86) International application number: GB9000218
(87) International publication number: WO9009211

(56) References cited:
- US-A- 2 018 884
- PATENT ABSTRACTS OF JAPAN, Volume 3, No. 116 (M-74), 27 September 1979, & JP,A, 5491966 (Ebara Infilco K.K.) 20 July 1979
- Glass Technology, Volume 26, No. 6, December 1985, (Sheffield, GB), M.C.REYNOLDS: "Batch Charging of Electric Furnaces", pages 251-254

## Description

### Field of the Invention

This invention relates to a method of treating toxic waste and particularly toxic waste resulting from incineration of industrial or domestic refuse.

Industrial and domestic refuse are conventionally destroyed by burning all the refuse in incinerators. The gases produced in this incineration contain a variety of toxic materials which must not be released into the atmosphere and these toxic materials are therefore filtered from the incinerator gases using precipitators and scrubbers. The waste material extracted from the precipitators contains organic poisons such as dioxins, as well as heavy metals. The quantities of the heavy metals, chlorides and sulphates present in this waste material are such that the heavy metals may be leached from the waste material by water in concentrations which frequently exceed the concentrations permitted to be released into the environment under environmental regulations in many countries.

The heavy metals which are present in this toxic waste material in quantities such that the heavy metal will be leached from the waste material in concentrations above permitted environmental regulations, are particularly zinc, cadmium, mercury, nickel, copper and lead. Other heavy metals which are frequently present in the toxic waste resulting from incineration of industrial and domestic refuse are iron, chromium, titanium, vanadium, beryllium and arsenic.

Because this toxic waste material cannot be disposed of in the environment, attempts have been made to treat it in order to render it safe for disposal in the environment. For example attempts have been made to dispose of the toxic waste material by incorporating it with cement to form solid blocks which are then placed in land fill sites. However it has been found that the soluble chlorides and sulphates of the heavy metals leach out into the surrounding soil. Attempts have also been made to render the toxic heavy metals safe by forming the toxic waste material into a glass. However when the toxic waste material is incorporated in a glass-forming batch and melted in a furnace a large proportion of the toxic heavy metals present (60% by weight or more) is lost by vaporization and must be trapped in the furnace flues, recovered and fed again to the furnace. An alternative method which has been used to convert the toxic heavy metals into a glass is to put the material through a plasma arc to form a glass. Losses of the toxic heavy metals by vaporization in excess of 40% by weight are common in this process and again the vaporized heavy metals must be trapped in a flue and re-circulated.

In both these methods the need to trap substantial quantities of vaporized heavy metals and recirculate them has meant that neither method has been considered to be a viable solution to the problem of rendering toxic waste materials harmless.

The presence of the heavy metals such as zinc, cadmium, mercury, nickel, copper and lead in the toxic waste material has therefore so far proved an insuperable obstacle to rendering the toxic waste material safe. In consequence those engaged in the refuse disposal business find themselves with accumulating quantities of toxic waste material which they can only store. There is therefore a major problem in the refuse disposal business in knowing what to do to contain this toxic waste material or to render it safe for disposal.

One type of furnace in glass manufacture is the cold top melter. One such cold top melter is described in Glass Technology, Vol 26, No 6, December 1985 (Sheffield, GB), M C Reynolds: "Batch charging of electric furnaces", pages 251-254. Such cold top melters are arranged such that a depth of unmelted feed batch is maintained above the molten vitreous mass which ensures that volatile oxides condense within the batch and are refluxed back into the glass.

It has been suggested that vitrification of high level waste is basically glass melting and that technology from the glass industry could be adapted to vitrifying high level wastes. See "American Institute of Chemical Engineers, Symposium Series (1976) Vol 72, No 154, C C Chapman, H T Blair and W F Bonner "Experience with Waste Vitrification Systems at Batelle - Northwest", pages 151-160. In this article it is suggested that toxic waste material can be vitrified by feeding the waste with glass firing materials into a feed column where the materials are heated to form a molten vitreous mass and an unmelted feed batch is maintained above the molten vitreous mass to prevent vaporized heavy metals and heavy metal compounds passing through the unmelted feed batch above the molten vitreous mass.

However the feed batch is in powder form which means that gases cannot pass through the layer of unmelted feed batch. This could result in a potentially hazardous build-up of pressure which could only be avoided by ensuring a gap within the layer of feed batch but such gap would allow the escape of toxic gases, which clearly is undesirable.

According to the present invention there is provided a method of rendering toxic waste material containing heavy metals harmless by feeding a batch comprising toxic waste material and glass-forming materials such as silica and lime down a substantially vertical feed column wherein the toxic waste material and the glass-forming materials are heated to form a molten vitreous mass, maintaining a sufficient depth of unmelted feed batch above the molten vitreous mass in the feed column to prevent vaporized heavy metals and heavy metal compounds passing through the unmelted feed batch above the molten vitreous mass, and thereafter cooling the molten vitreous mass to provide a solid vitreous material containing the heavy metals characterised in that the feed column is a cold top melter, the unmelted feed batch is pelletised, and that infra-sound energy is applied across the pelletised feed batch in the substantially vertical column at a level at which condensates are deposited on the pellets of the unmelted pelletised feed batch.

The pelletised batch provides routes through which gases evolved during melting of the batch may pass thereby avoiding a build-up of pressure in a gas cloud beneath the feed batch blanket to an extent which could be dangerous and lead to an explosion.

Because the feed batch is pelletised, there is no direct route for gases to escape from the melt to the atmosphere above the cold-top melter. The hot gases must pass along a tortuous route between the pellets and in doing so the gases cool and heavy metal volatiles in the gases condense on the pellets which carry the condensed volatiles back into the melting zone.

It is preferred that the feed batch has a pellet size in the range from 8mm diameter to 25mm diameter. If the pellet size is substantially smaller than this range, the gaps between the pellets may be filled by condensates thus providing an impermeable layer below which gas pressure will build up leading to violent eruptions which, as already explained, should be avoided. If the pellet size is substantially larger than the range mentioned, the gaps between the pellets are greater and the escape routes for the gases are too large, with the result that the volatilised heavy metals and heavy metal compounds may not cool sufficiently to condense before escaping into the atmosphere. Alternatively an unacceptable height of feed batch above the molten zone in the cold-top melter may be required.

The density and specific heat of the pellets are also important factors in ensuring condensation of the heavy metal volatiles. The density of the pellet affects the ability of the pellet to absorb heat from the gases and it is also important in connection with the strength and ability of the pellet to hold its shape in mechanical systems before the pellet is charged into the cold-top melter.

As volatiles in the gases passing through the unmelted feed batch condense on the pellets, there is a tendency for this condensate to act as an adhesive causing the pellets to stick together. Such a tendency for the pellets to adhere can result in pellets adhering together across a whole width of the feed batch in the cold-top melter so that a sort of bridge is formed which jams within the feeder and prevents the feed batch moving down into the melting zone.

If such a bridge were to form it would, in accordance with conventional practice in the use of cold-top melters, be broken using a mechanical poker. However the use of a mechanical poker pushed through the feed batch in order to break the bridge would inevitably provide a direct route for escape of heavy metal volatiles. The use of a mechanical poker is therefore impracticable when melting a batch including toxic waste.

In accordance with the present invention, the build-up of a bridge in the feed batch is prevented by applying infra-sound energy across the feed batch in the vertical feed column. Preferably the infra-sound is applied at a frequency in a range from 10 to 25 cycles per second at a level of the order of 140 decibels. Such infra-sound has the effect of mechanically vibrating firstly the air and then the volatiles which fill the spaces between the pellets thus breaking the bridges without enabling heavy metal volatiles to escape through the feed batch.

The infra-sound may be applied continuously or intermittently and, if applied intermittently, the intermittent applications of infrasound would conveniently alternate with the feeding of batch ingredients to the cold-top melter by mechanised devices.

In this solid vitreous material, the heavy metal elements are combined in such a way that the heavy metals are not leached significantly from the solid vitreous material by contact with water, and environmental regulations with regard to the release of heavy metals into the environment are not contravened.

In order to ensure that no volatilised heavy metals or heavy metal compounds are contained in the gases which pass through the unmelted feed batch, it is necessary to maintain a batch blanket over the molten vitreous mass substantially thicker than the batch blanket thickness of approximately 150mm which is normally used in cold-top applications. In accordance with the present invention a feed batch blanket thickness of at least 500mm of solid feed batch should be maintained to ensure that the heavy metals become incorporated in the solid vitreous material formed in the cold-top melter.

The depth of unmelted feed batch maintained above the molten glass in the cold-top melter is advantageously such that gases emerging from the cold-top melter are at a temperature no higher than 100°C. With a 500mm depth of unmelted feed batch, escaping gases were generally at a temperature below 50°C. Preferably a one metre depth of unmelted feed batch is maintained over the molten glass. With such a depth of unmelted feed batch it has been found that the gases escaping from the cold-top melter are at a temperature which is substantially ambient temperature, for example 20°C.

Performance of the method in accordance with the present invention ensures that no vaporized heavy metals or heavy metal compounds escape from the cold-top melter, all the heavy metals being incorporated in the molten glass formed in the cold-top melter. The mechanism by which this incorporation of the heavy metals into the molten glass takes place has not been proved, but it is thought that the pressure developed beneath the unmelted feed batch forces the majority of the vaporized heavy metals and heavy metal compounds into solution in the molten glass. Any of the vaporized heavy metals and heavy metal compounds which are carried away in the waste gases condense on the unmelted feed batch and are automatically refed to the melting zone of the cold-top melter.

Molten glass from a cold-top melter is normally passed from the bottom of the melter via a throat, a riser and a forehearth from which the glass is poured and quenched. As the molten glass according to the present invention contains the volatile heavy metal materials, these will readily escape into the atmosphere through the roof of the forehearth of the conventional furnace because the refractory roof expands and contracts during heating of the furnace from cold and during operation. It is virtually impossible to cater for this movement of the refractory as sealing of cracks in the refractory is merely a temporary expedient. Each time a crack or gap appears in the roof of the forehearth, volatiles will be released into the atmosphere.

A possible solution is to suspend water-cooled boxes above the length and width of the forehearth, thus presenting an immediate cold face upon which the volatiles will condense. However this is unsatisfactory, because the underside of the boxes will require constant cleansing, and any dust released into the atmosphere will be highly toxic.

In accordance with another aspect of the present invention, the release of volatiles from the molten glass into the atmosphere is prevented by causing the molten vitreous material to exit from the furnace into an enclosed central cavity within the furnace.

Thus having cooled the gases emitted substantially below the condensation temperatures of all the vaporized heavy metals and heavy metal compounds by passing the gases through the unmelted pelletised feed batch in the feed column above the molten vitreous mass, it is preferred that molten vitreous material is delivered through exits into a space which is enclosed on all sides and above by a lower part of the vertical column within which the molten vitreous material is being formed, and immediately quenching the molten vitreous material in water.

A convenient and cheap source of silica for heating with the toxic waste material is the fly ash obtainable as a waste product from a normal power station. In one method according to the present invention, therefore, the feed batch comprises toxic waste, derived from the precipitators in the flues of refuse incinerators and a greater quantity of powdered fly ash. Preferably the toxic waste and powdered fly ash are melted together with lime in the form of either calcium oxide or calcium carbonate. Alternatively, the calcium component of the glass may be provided by using the toxic residues from the scrubbers in the flues of refuse incinerators where compounds such as calcium hydroxide or calcium carbonate have absorbed acid gases and heavy metal volatiles which have passed the initial electrostatic precipitator. In such cases the molten vitreous mass formed may contain as much as 72% by weight of toxic residues derived from precipitators and scrubbers.

In a treatment of toxic waste by the method of the present invention the inclusion of alkali metal oxides among the added glass-forming materials should be avoided. While a limited quantity of alkali metal oxides, such as is found in the toxic waste, may be accepted and a satisfactory harmless glass product obtained, the presence of greater quantities of alkali metal oxides will increase the risk of heavy metals being leached from the glass product of the treatment process according to the invention.

In carrying out a process of treating toxic waste in accordance with the present invention the ingredients of the solid vitreous material obtained are preferably selected such that the Basicity Ratio or Basicity Factor, which is defined as the aggregate of the weight percentages of calcium oxide and magnesium oxide divided by the aggregate of the weight percentages of silica and alumina, lies between 0.90 and 1.10.

A glass having a Basicity Factor of the order of 1.0 is strong, in that it has a high crushing strength, is hard in that it has a high polish factor, and has a high density.

A preferred glass having a Basicity Factor of 1.0 is a glass composition approximating to
45% CaO
30% SiO₂
15% Al₂O₃
the balance being Fe₂O₃, TiO₂, a little alkali etc. The high strength, hardness and high density of this glass will be substantially unchanged by the inclusion of a percentage of MgO provided that there is a corresponding reduction in the percentage of CaO present in the glass. If the toxic waste material is, for example, some kinds of asbestos, as much as 24% MgO may be included, in which case the CaO content is reduced to 21%. However, about 6% MgO is preferred, because this produces a fairly low viscosity glass which is readily pourable.

The present invention will be further understood from the following detailed examples of toxic waste materials which have been made into a solid vitreous material or glass by a method in accordance with the present invention.

### EXAMPLE 1

A study was made of ten samples of a waste material derived from precipitators used in the flues of incinerators where industrial waste was burnt. In addition to organic poisons such as dioxins, this waste material from the precipitators was found to contain heavy metals and in the table given below there are shown the range of concentrations of each heavy metal leached from the ten samples of toxic waste material by a deionised water treatment for twenty-four hours, which is officially regarded as equivalent to the quantities of the heavy metal which would pass into the environment from the toxic waste material in a period of twenty years.

| **Heavy Metal** | **Leached from the waste mg/litre** |
|---|---|
| Pb | 3.7 - 13.0 |
| Cd | 16 - 160 |
| Cr | <0.02 - 0.1 |
| Zn | 200 - 2000 |
| Cu | 4.6 - 180 |
| Ni | 0.5 - 3.0 |
| Fe | <0.1 - 0.4 |
| Hg | <0.005 |
| As | <0.005 - 0.012 |
| Ti | <0.1 - 1.0 |
| Be | <0.1 - 2.5 |
| V | <1 |

Analysis of one of the waste materials showed that the approximate composition of the toxic waste material was as follows, the figures all being in wt%:-

| | |
|---|---|
| SiO₂ | 14.5 |
| CaO | 2.45 |
| MgO | 0.66 |
| Al₂O₃ | 2.3 |
| Na₂O | 14.15 |
| K₂O | 6.45 |
| Loss on ignition at 1000°C | 9.7 - Brown sintered |
| | mass |
| Cl' | 7.2 |
| SO₄'' | 23.95 |
| Heavy metals (as above) | Balance |

Of the heavy metals, those present in the greatest quantity were iron from 3.5 to 7.9%, zinc from 1.4 to 4.4% and lead from 1.8 to 4.6%, copper up to 0.6%, chromium up to 0.2% and nickel up to 0.2%.

In order to treat this toxic waste material in accordance with this present invention, there was made up a batch comprising:-
40 parts toxic waste material (referred to as T.F.A.)
100 parts normal power station fly ash (PFA)
100 parts limestone (CaCO₃)
4 parts magnesite (MgO)
This batch was compiled with a view to producing a melt of which the toxic waste would comprise 25% by weight, the batch losing moisture from the powdered fly ash and carbon dioxide from the limestone.

The powdered fly ash (PFA) used had a composition within the following range by wt%:-

| | |
|---|---|
| SiO₂ | 53.1 - 56.5 |
| Al₂O₃ | 23.6 - 28.4 |
| Fe₂O₃ | 8.66 - 10.9 |
| MgO | 1.51 - 1.91 |
| CaO | 1.14 - 2.48 |
| K₂O | 3.49 - 3.88 |
| Na₂O | 0.79 - 1.48 |
| TiO₂ | 0.93 - 1.01 |
| SO₃ | 0.32 - 0.73 |
| Loss on ignition | 1.81 - 7.74 |

The batch was made up, pelletised and then fed to a cold-top melter which comprises a substantially vertical feed column down which the batch is fed to a heating zone which is an electric furnace using carbon electrodes. The construction of the coldtop melter used will be described in detail later in the specification. The pelletised batch is melted by heating in the electric furnace at a temperature of 1380°C. The coldtop melter used was constructed to have a column comprising one metre of molten glass with one metre of unmelted feed batch above the molten glass. The gases emitted in the furnace passed up the feed column through the unmelted pelletised feed batch where they were cooled to a temperature substantially below the condensation temperatures of all the vaporized heavy metals and heavy metal compounds. Accordingly the cooled gases emerging at the top of the feed column contained no heavy metals, the heavy metals being incorporated in molten glass formed in the furnace.

A pressure drop is created between the surface of the molten glass in the coldtop melter and the atmosphere over the unmelted pelletised feed batch because of the tortuous path which the gases are obliged to follow in passing through the unmelted pelletised feed batch to atmosphere. The back pressure thus created at the surface of the molten glass forces volatile heavy metal compounds into solution in the molten glass.

The gases emitted in the furnace and emerging from the top of the feed column were passed through a flame at a temperature of 1300°C which destroyed dioxins given off during heating in the furnace. A continuous sample of the emission was taken, and analysis showed that, prior to the flame treatment, the content of dioxins in the emitted gas was 18 nanograms per cubic metre, but after flame treatment the dioxins had been substantially entirely destroyed, there being less than 0.1 nanograms of dioxins per cubic metre of gas. There was little evidence either of chlorine gas in the emissions from the furnace.

The vitreous melt formed in the electric furnace was poured molten at 1380°C into water, and a solid vitreous mass with an average particle size of 3 cubic mms was obtained.

Chemical analysis of the glass obtained showed the following composition:-

| | |
|---|---|
| SiO₂ - 34.86% | ZnO - 2.36% |
| CaO - 22.56% | CdO - 0.004% |
| MgO - 3.15% | CuO - 0.06% |
| Al₂O₃ - 13.95% | PbO - 0.64% |
| Fe₂O₃ - 10.18% | NiO - 0.04% |
| Na₂O - 4.85% | Cr₂O₃ - 0.09% |
| K₂O - 1.44% | SO₄'' - 0.89% |
| ZrO₂ - 0.06% | Cl' - 0.33% |
| TiO₂ - 3.11% | |

This solid vitreous mass was tested by the leaching test in water for twenty four hours mentioned above, which is a test according to German Standard DEV S4, and no trace was found of any of the heavy metals.

### EXAMPLE 2

Following the procedure of Example 1 and using similar T.F.A and P.F.A there was made up a batch comprising 21 parts toxic waste material (T.F.A), 40 parts normal power station fly ash (P.F.A), 35 parts of toxic scrubber residues (referred to as A.K.) and 4 parts MgO.

The scrubber residues (A.K.) were derived from the same incinerator chimneys as the T.F.A. and analysis of the A.K. showed the following composition by weight:

| | |
|---|---|
| CaO - 53.21% | CdO - 0.003% |
| MgO - 0.43% | Cr₂O₃ - 0.002% |
| Al₂O₃ - 0.46% | CuO - 0.015% |
| Na₂O - 0.95% | Fe₂O₃ - 0.11% |
| K₂O - 0.11% | Cl - 10.53% |
| ZnO - 0.05% | SO₄ - 3.91% |
| PbO - 0.02% | Loss on - 32.79% ignition |

The glass obtained was tested by the leaching test of German Standard DEV S4 and no trace of any of the heavy metals was found.

### EXAMPLE 3

Again following the procedure of Example 1 there was made up a batch containing 21 parts T.F.A., 20 parts P.F.A., 35 parts A.K., 4 parts MgO, 20 parts SiO₂, as in the form of a waste grinding medium from the solid glass industry.

The chemical analysis of the glass obtained from this feed batch showed the following composition:

| | |
|---|---|
| SiO₂ - 42.60% | CuO - 0.05% |
| CaO - 28.60% | PbO - 0.01% |
| MgO - 6.44% | NiO - 0.03% |
| Al₂O₃ - 9.69% | Cr₂O₃ - 0.08% |
| K₂O - 0.30% | SO₄ - 0.90% |
| Na₂O - 0.98% | Cl - 0.45% |
| Fe₂O₃ - 4.79% | TiO₂ - 1.70% |
| ZnO - 0.89% | ZrO₂ - 0.02% |
| CdO - 0.01% | |

The glass obtained was crystallised in an electric oven at 1000°C for one hour and the resultant material tested according to German Standard DEV S4 and no trace was found of any of the heavy metals.

A preferred embodiment of the cold top electric melter used in carrying out the method of the present invention according to the foregoing examples will now be described, by way of example, with reference to the accompanying drawings, in which:-
Figure 1 is a side cross-sectional view of a coldtop melter in accordance with this aspect of the present invention, and
Figure 2 is a diagrammatic plan view of the coldtop melter of Figure 1.

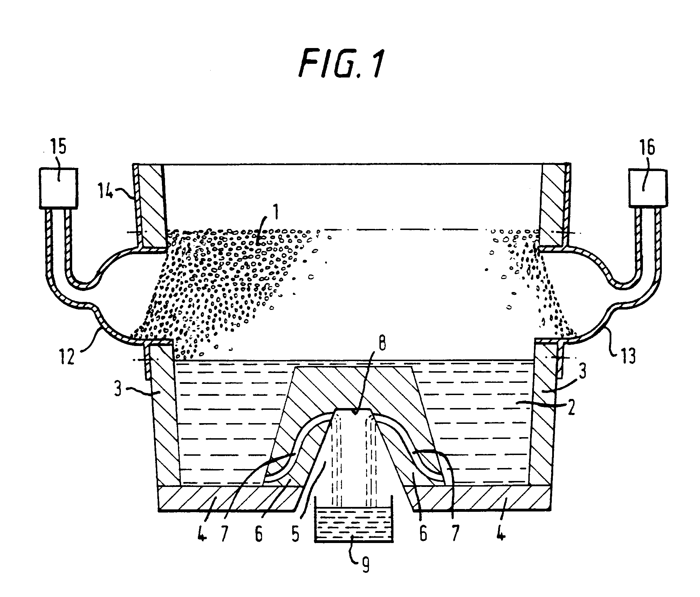

Referring to Figure 1 of the drawings, pelletised batch 1 is fed vertically to a heating zone of a cold-top melter type of furnace in which a molten vitreous material or glass 2 is formed. The cold-top melter has a conventional circumferential side wall 3 and a base 4 which is substantially modified from the conventional furnace base for incorporating heavy metals into a molten vitreous mass by a method according to the present invention.

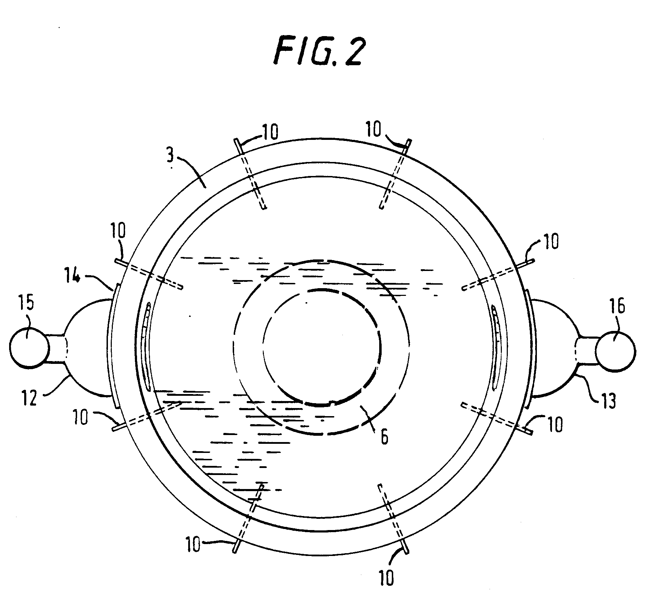

Within a central part of the base 4 of the cold-top melter, there is created an enclosed space 5 which is surrounded on all sides and above by a refractory furnace exit construction 6. A plurality of exit channels 7 pass through the refractory furnace exit construction 6 from positions near the floor of the furnace to positions near a ceiling 8 of the enclosed space 5. Means is provided for heating the refractory material of the refractory furnace exit construction 6. This refractory material may be electrically conductive, for example carbon, so that the refractory material of the furnace exit construction 6 may form part of the circuit for heating the batch within the furnace and producing the molten vitreous material. Such an arrangement is illustrated diagrammatically in Figure 2. Alternatively the refractory material of the furnace exit construction 6 may be susceptible to heating by induction.

In Figure 1 the enclosed space within the circle of the furnace construction is of a frusto-conical shape but it could alternatively be of a conical, cylindrical or semi-circular shape in cross-section.

The heating of the refractory material of the furnace exit construction 6 is necessary to prevent any solidification of the molten vitreous material in the exit channels 7. The molten vitreous material delivered from the channels 7 into the enclosed space 5 is poured directly into a water bath 9 where the material is quenched and a frit is formed.

Because the space 5 is enclosed on all sides and above by the furnace construction, the volatiles cannot escape into the surrounding atmosphere. Also the build-up of partial pressure of volatiles in the atmosphere of the enclosed space 5 will tend to limit subsequent volatilisation.

Referring to Figure 2 there is shown diagramatically the cold-top melter of Figure 1 in which the refractory material of the furnace exit construction 6 is used as one electrode in providing the electrical current for heating and melting the batch materials. The electrical current flows between horizontally disposed electrodes 10 passing through the cylindrical side wall 3 and the furnace exit construction 6. The horizontal mounting of the electrodes 10 ensures that all gases escaping from the melt must pass through the pelletised feed batch and thus follow a tortuous path during which the gases are cooled and volatiles are condensed out. Substantially all, more than 95%, and in most cases as much as 99%, by weight, of the toxic heavy metals are thus incorporated in the glass, and only minimal recovery of toxic heavy metal salts from the flue is required.

Referring again to Figure 1, there are shown diagrammatically infra-fones 12 and 13 which generate infra-sound waves at a frequency of 15 - 20 cycles per second at a level of 140 decibels. The infra-fones 12 and 13 are bolted to a steel casing 14 on the outside of the circumferential side wall 3 of the cold-top melter so as to pass or receive infra-sound waves through circular apertures positioned opposite one another in the circumferential side wall 3 above the level of the molten glass. The infra-fones 12 and 13 include oscillators 15 and 16 which each act alternately as generator and receiver to pass infra-sound waves through the unmelted pelletised feed batch located between the infra-fones 12 and 13.

Some unmelted pelletised feed batch will fill the entrance to each infra-fone 12 and 13 and provide protection for the oscillators 15 and 16 against the heat from the melting zone of the furnace. The infra-fones 12 and 13 are sealed, and no escape of volatiles can take place through infra-fones 12 and 13.

The application of infra-sound waves by the infra-fones 12 and 13 prevents adherence of adjacent pellets of unmelted pelletised feed batch to one another as a result of condensation forming on the pellets.

According to the present invention there is further provided, for use in carrying out processes according to the present invention a glass-melting furnace which comprises a substantially circular wall of refractory material defining a vertical column, a refractory base constituting a floor to the vertical column, means for feeding pelletised batch material to the top of the vertical column, electrode means for heating batch materials at a lower part of the vertical column to form a molten vitreous mass near the floor of the furnace, and a refractory furnace exit construction at a central part of the floor of the furnace within the vertical column and defining, within the vertical column, a space which is closed against upward or sideways movement of gaseous material from the space, the refractory furnace exit construction having walls with a plurality of exit channels passing therethrough for delivering molten vitreous material from near the floor of the furnace into an upper part of the enclosed space, and means for heating the walls of the furnace exit construction.

The glass-melting furnace preferably further includes means for applying infrasound energy across pelletised batch material in a part of the vertical column above the electrode means.

In carrying out the present invention as described herein, it is preferred to form a glass incorporating the toxic waste which has the following properties:-
(i) Low melting temperature, about 1,300 to 1,350°C
(ii) Low viscosity when molten, about 10 to 50 poise
(iii) Sufficient content of elements or compounds which provide nucleating "seeds"

In selecting a melting temperature it is desirable to keep this as low as possible in order to limit the volatilisation, but the temperature must be high enough to achieve an economical through-put.

A low viscosity for the glass improves the mixing of the components within the melt. Thorough mixing during melting is desirable because toxic wastes are very variable in composition and thorough mixing during melting will equalise out some of the variability.

It is desirable that as much as possible of the glass formed should be crystallised. To this end it is desirable to use one or more components which provide nucleating seeds. Powdered fly ash, which is exemplified herein as a cheap and convenient source of glass-making materials and particularly of silica, is a compound which is known to provide crystallisation seed.

The major components used in the process according to the present invention may be waste products from other manufacturing processes, and therefore the method of rendering toxic waste materials harmless as herein described may be a relatively inexpensive process.

Inert solid viscous material of suitable viscosities may be formed into products such as grit, blocks, and tiles which may be used without causing environmental pollution.

## Claims

1. A method of rendering toxic waste material containing heavy metals harmless by feeding a batch comprising toxic waste material and glass-forming materials such as silica and lime down a substantially vertical feed column wherein the toxic waste material and the glass-forming materials are heated to form a molten vitreous mass, maintaining a sufficient depth of unmelted feed batch above the molten vitreous mass in the feed column to prevent vaporized heavy metals and heavy metal compounds passing through the unmelted feed batch above the molten vitreous mass, and thereafter cooling the molten vitreous mass to provide a solid vitreous material containing the heavy metals characterised in that the feed column is a cold top melter, the unmelted feed batch is pelletised, and that infra-sound energy is applied across the pelletised feed batch in the substantially vertical column at a level at which condensates are deposited on the pellets of the unmelted pelletised feed batch.

2. A method according to claim 1, further characterised in that the unmelted feed batch is formed into pellets having a pellet size in the range from 8mm diameter to 25mm diameter.

3. A method according to claim 2 wherein the infra-sound waves are generated continuously.

4. A method according to claim 2 wherein the infra-sound waves are generated intermittently.

5. A method according to claim 4 wherein the intermittent generation of infra-sound waves alternates with the intermittent feeding of pelletised batch to the top of the substantially vertical column.

6. A method according to any one of the preceding claims, in which an unmelted feed batch of a thickness of at least 500mm of solid feed batch is maintained above the molten vitreous mass.

7. A method according to any one of the preceding claims which further comprises the step of delivering the molten vitreous material through exits into a space which is enclosed.

8. A method according to any one of the preceding claims wherein the feed batch comprises toxic waste and a greater quantity of powdered fly ash.

9. A method according to claim 8 wherein the toxic waste is derived from the precipitators in the flues of refuse incinerators.

10. A method according to claim 9 wherein the feed batch further includes lime in a form selected from the group comprising calcium oxide, calcium carbonate and toxic residues derived from the scrubbers in the flues of refuse incinerators.

11. A method according to claim 10 wherein the feed batch has a Basicity Factor, defined as the aggregate of the weight percentages of calcium oxide and magnesium oxide divided by the aggregate of the weight percentages of silica and alumina, lying between 0.90 and 1.10.

12. A method according to claim 11 wherein the feed batch includes about 6% by weight of magnesium oxide.

13. A method according to claim 12 where emitted gases emerging from the feed batch are passed through a flame at 1300°C.

14. A glass-melting furnace comprising a substantially circular wall of refractory material defining a vertical column and a refractory base constituting a floor to the vertical column, characterised in that it also comprises means for feeding pelletised batch material to the top of the vertical column, electrode means for heating batch materials at a lower part of the vertical column to form a molten vitreous mass near the floor of the furnace, and a refractory furnace exit construction at a central part of the floor of the furnace within the vertical column and defining, within the vertical column, a space which is closed against upward or sideways movement of gaseous material from the space, the refractory furnace exit construction having walls with a plurality of exit channels passing therethrough for delivering molten vitreous material from near the floor of the furnace into an upper part of the enclosed space, and means for heating the walls of the furnace exit construction.

15. A glass melting furnace according to claim 14 which further comprises means for applying infra sound energy across pelletised batch material in a part of the vertical column above the electrode means.

## Patentansprüche

1. Verfahren zum Unschädlichmachen von giftigem Abfallstoff, der Schwermetalle enthält, indem eine Charge, die giftigen Abfallstoff und glasbildende Materialien, wie Siliziumdioxid und Kalk, enthält, einer im wesentlichen vertikale Beschickungssäule abwärts zugeführt wird, wobei der giftige Abfallstoff und die glasbildenden Materialien erhitzt werden, um eine geschmolzene glasige Masse zu bilden, wobei eine ausreichende Dicke der ungeschmolzenen zugeführten Charge über der geschmolzenen glasigen Masse in der Beschickungssäule aufrechterhalten wird, um zu verhindern, daß verdampfte Schwermetalle und Schwermetallverbindungen durch die ungeschmolzene zugeführte Charge über der geschmolzenen glasigen Masse hindurchgehen, und danach Abkühlen der geschmolzenen glasigen Masse, um ein festes glasiges Material zu bilden, das die Schwermetalle enthält, dadurch gekennzeichnet, daß die Beschickungssäule ein Cold-Top-Schmelzofen ist, daß die ungeschmolzene zugeführte Charge pelletisiert ist und daß Infraschallenergie quer durch die pelletisierte zugeführte Charge in der im wesentlichen vertikalen Säule bei einer Höhe eingesetzt wird, bei der sich Kondensate auf den Pellets der ungeschmolzenen pelletisierten zugeführten Charge ablagern.

2. Verfahren nach Anspruch 1, darüber hinaus dadurch gekennzeichnet, daß die ungeschmolzene zugeführte Charge zu Pellets geformt ist, die eine Pelletgröße im Bereich von 8 mm Durchmesser bis 25 mm Durchmesser aufweisen.

3. Verfahren nach Anspruch 2, wobei die Infraschallwellen kontinuierlich erzeugt werden.

4. Verfahren nach Anspruch 2, wobei die Infraschallwellen intermittierend erzeugt werden.

5. Verfahren nach Anspruch 4, wobei die intermittierende Bildung von Infraschallwellen mit der intermittierenden Zufuhr von pelletisierter Charge zu dem oberen Teil der im wesentlichen vertikalen Säule abwechselt.

6. Verfahren nach einem der vorhergehenden Ansprüche, wobei eine ungeschmolzene zugeführte Charge einer Dicke von mindestens 500 mm fester zugeführter Charge über der geschmolzenen glasigen Masse aufrechterhalten wird.

7. Verfahren nach einem der vorhergehenden Ansprüche, das darüber hinaus den Schritt umfaßt, das geschmolzene glasige Material durch Auslässe in einen Raum leitet, der abgeschlossen ist.

8. Verfahren nach einem der vorhergehenden Ansprüche. wobei die zugeführte Charge giftigen Abfall und eine größere Menge pulverisierte Flugasche umfaßt.

9. Verfahren nach Anspruch 8, wobei der giftige Abfall aus den Abscheidern in den Feuerzügen von Müllverbrennungsöfen stammt.

10. Verfahren nach Anspruch 9, wobei die zugeführte Charge darüber hinaus Kalk, in einer Form ausgewählt aus der Gruppe umfassend Calciumoxid, Calciumcarbonat und giftige Rückstände, die aus den Wäschern in den Feuerzügen von Müllverbrennungsöfen stammen, umfaßt.

11. Verfahren nach Anspruch 10, wobei die zugefügte Charge einen Basizitätsfaktor aufweist, der definiert ist als das Aggregat der Gewichtsprozente von Calciumoxid und Magnesiumoxid dividiert durch das Aggregat der Gewichtsprozente von Siliziumdioxid und Aluminiumoxid, wobei der Basizitätsfaktor zwischen 0,90 und 1,10 liegt.

12. Verfahren nach Anspruch 11, wobei die zugeführte Charge etwa 6 Gew.-% Magnesiumoxid umfaßt.

13. Verfahren nach Anspruch 12, wobei emittierte Gase, die aus der zugeführten Charge austreten, bei 1300 °C durch eine Flamme geleitet werden.

14. Glasschmelzofen, umfassend eine im wesentlichen kreisförmige Wand aus feuerfestem Material, die eine vertikale Säule definiert und eine feuerfeste Basis, die einen Boden der vertikaler Säule bildet, dadurch gekennzeichnet, daß er auch Vorrichtungen zum Zuführen von pelletisiertem Chargenmaterial in den oberen Teil der vertikalen Säule umfaßt, und Elektrodenvorrichtungen zum Heizen des Chargenmaterials an einem unteren Teil der vertikalen Säule umfaßt, um eine geschmolzene glasige Masse nahe dem Boden des Ofens zu bilden, und eine feuerfeste Ofenauslaßkonstruktion an einem mittleren Teil des Bodens des Ofens innerhalb der vertikalen Säule umfaßt und innerhalb der vertikalen Säule einen Raum definiert, der gegen Aufwärts- und Seitwärtsbewegungen von gasförmigen Stoffen aus dem Raum abgeschlossen ist, wobei die feuerfeste Ofenauslaßkonstruktion Wände mit einer Vielzahl von Auslaßkanälen, die durch diese hindurchgehen, aufweist, um geschmolzenes glasiges Material von der Bodennähe des Ofens in einen oberen Teil des abgeschlossenen Raumes zu leiten, und Vorrichtungen zum Heizen der Wände der Auslaßkonstruktion des Ofens aufweist.

15. Glasschmelzofen nach Anspruch 14, der darüber hinaus Vorrichtungen zum Einsetzen von Infraschallenergie quer durch pelletisiertes Chargenmaterial in einem Teil der vertikalen Säule oberhalb der Elektrodenvorrichtungen umfaßt.

## Revendications

1. Procédé pour rendre inoffensifs des déchets toxiques renfermant des métaux lourds, consistant à faire descendre une composition comprenant des déchets toxiques et des matériaux formateurs de verre tels que la silice et la chaux, dans une colonne d'alimentation substantiellement verticale dans laquelle les déchets toxiques et les matériaux formateurs de verre sont chauffés en vue de former une masse vitreuse fondue, à maintenir une hauteur suffisante de charge non fondue au-dessus de la masse vitreuse fondue présente dans la colonne d'alimentation, pour empêcher des métaux lourds vaporisés et des composés de métaux lourds de traverser la charge non fondue qui se trouve au-dessus de la masse vitreuse fondue, et à refroidir ensuite la masse vitreuse fondue, afin de produire un matériau vitreux solide contenant les métaux lourds, caractérisé en ce que la colonne d'alimentation est un fondoir à tête froide, en ce que la charge non fondue est pelletisée, et en ce que de l'énergie infrasonore est appliquée au-travers de la charge pelletisée présente dans la colonne substantiellement verticale, à un niveau auquel les condensats se déposent sur les pellets de la charge non fondue pelletisée.

2. Procédé suivant la revendication 1, caractérisé, en outre, en ce que la charge non fondue est transformée en pellets d'une granulométrie comprise dans une plage allant de 8 à 25 mm de diamètre.

3. Procédé suivant la revendication 2, dans lequel les ondes infrasonores sont générées en continu.

4. Procédé suivant la revendication 2, dans lequel les ondes infrasonores sont générées par intermittence.

5. Procédé suivant la revendication 4, dans lequel l'émission intermittente d'ondes infrasonores alterne avec le chargement intermittent de la composition pelletisée à la partie supérieure de la colonne substantiellement verticale.

6. Procédé suivant l'une quelconque des revendications précédentes, dans lequel une charge non fondue d'une épaisseur d'au moins 500 mm de charge solide est maintenue au-dessus de la masse vitreuse fondue.

7. Procédé suivant l'une quelconque des revendications précédentes, comprenant, en outre, l'opération consistant à faire passer le matériau vitreux fondu, par des sorties, dans un espace clos.

8. Procédé suivant l'une quelconque des revendications précédentes, dans lequel la charge comprend des déchets toxiques et une plus grosse quantité de cendres volantes réduites en poudre.

9. Procédé suivant la revendication 8, dans lequel les déchets toxiques sont extraits des cuves de précipitation agencées dans les conduits d'incinérateurs de déchets.

10. Procédé suivant la revendication 9, dans lequel la charge comprend, en outre, de la chaux, sous une forme choisie dans le groupe comprenant l'oxyde de calcium, le carbonate de calcium et les résidus toxiques extraits des scrubbers agencés dans les conduits d'incinérateurs de déchets.

11. Procédé suivant la revendication 10, dans lequel la charge présente un Facteur de Basicité, défini comme étant le total des pourcentages en poids d'oxyde de calcium et d'oxyde de magnésium divisé par le total des pourcentages en poids de silice et d'alumine, se situant entre 0,90 et 1,10.

12. Procédé suivant la revendication 11, dans lequel la charge comprend environ 6 % en poids d'oxyde de magnésium.

13. Procédé suivant la revendication 12, dans lequel les gaz générés et se dégageant de la charge sont passés à travers une flamme à 1300 °C.

14. Four de verrerie comprenant une paroi substantiellement circulaire en matériau réfractaire définissant une colonne verticale, et une base réfractaire constituant la sole de la colonne verticale, caractérisé en ce qu'il comprend également des moyens pour alimenter la charge pelletisée à la partie supérieure de la colonne verticale, des électrodes pour chauffer les matières chargées, à la partie inférieure de la colonne verticale, pour former une masse vitreuse fondue à proximité de la sole du four, et une construction réfractaire de sortie du four située dans une partie centrale de la sole du four à l'intérieur de la colonne réfractaire et définissant, au sein de la colonne réfractaire, un espace clos pour empêcher les produits gazeux de se mouvoir par le haut ou par le côté de cet espace, la construction réfractaire de sortie du four présentant des parois dotées d'une pluralité de canaux de sortie qui les traversent, pour faire passer les matières vitreuses fondues d'un endroit situé à proximité de la sole du four, dans une partie supérieure de l'espace clos, et des moyens pour chauffer les parois de la construction de sortie du four.

15. Four de verrerie suivant la revendication 14, comprenant, en outre, des moyens pour appliquer de l'énergie infrasonore à travers la charge pelletisée, dans une partie de la colonne verticale qui se situe au-dessus des électrodes.
